Europäisches Patentamt

European Patent Office

Office européen des brevets

(19)

(11) **EP 1 347 477 A2**

(12) **EUROPÄISCHE PATENTANMELDUNG**

(43) Veröffentlichungstag:
24.09.2003 Patentblatt 2003/39

(51) Int Cl.⁷: **H01G 4/18**

(21) Anmeldenummer: 03003294.0

(22) Anmeldetag: **25.02.2003**

(84) Benannte Vertragsstaaten:
**AT BE BG CH CY CZ DE DK EE ES FI FR GB GR
HU IE IT LI LU MC NL PT SE SI SK TR**
Benannte Erstreckungsstaaten:
**AL LT LV MK RO**

(30) Priorität: **06.03.2002 DE 10209849
06.03.2002 DE 10209848**

(71) Anmelder: **Mitsubishi Polyester Film GmbH
65203 Wiesbaden (DE)**

(72) Erfinder:
• **Kliesch, Holger, Dr.
55252 Mainz (DE)**

• **Hilkert, Gottfried, Dr.
55291 Saulheim (DE)**
• **Murschall, Ursula, Dr.
55283 Nierstein (DE)**
• **Bursch, Annegrete
65385 Rüdesheim (DE)**
• **Crass, Günther
65232 Taunusstein (DE)**

(74) Vertreter: **Schweitzer, Klaus, Dr. et al
Patentanwaltskanzlei Zounek,
Industriepark Kalle-Albert,
Gebäude H391
Rheingaustrasse 190-196
65174 Wiesbaden (DE)**

(54) **Biaxial orientierte, flammhemmend ausgerüstete Folie aus einem kristallisierbaren Thermoplasten, Verfahren zu ihrer Herstellung und ihre Verwendung**

(57) Die Erfindung betrifft eine flammhemmend ausgerüstete, leitfähig beschichtete, orientierte Folie aus einem Thermoplasten, deren Dicke im Bereich von 0,5 bis 12 μm liegt. Die Folie enthält mindestens ein Flammschutzmittel und ist leitfähig beschichtet. Diese Folie besitzt gegebenenfalls außerdem mindestens eine zusätzliche Funktionalität gegenüber der flammhemmenden Ausrüstung. Der Ausdruck zusätzliche Funktionalität beinhaltet den Schrumpf und die Lötbarkeit. Alle derartigen Folien zeichnen sich durch ihre Schwerentflammbarkeit und durch ihre guten dielektrischen Eigenschaften aus. Insbesondere weisen sie eine hohe Durchschlagfestigkeit und einen niedrigen Verlustfaktor auf und darüber hinaus gegebenenfalls eine oder mehrere weitere Funktionalitäten. Die Erfindung betrifft ferner ein Verfahren zur Herstellung der Polyesterfolie sowie ihre Verwendung in SMD-Folienkondensatoren.

EP 1 347 477 A2

**Beschreibung**

Biaxial orientierte, flammhemmend ausgerüstete Folie aus einem kristallisierbaren Thermoplasten, Verfahren zu ihrer Herstellung und ihre Verwendung

Die Erfindung betrifft eine flammhemmend ausgerüstete, leitfähig beschichtete, orientierte Folie aus einem Thermoplasten, deren Dicke im Bereich von 0,5 bis 12 µm liegt. Die Folie enthält mindestens ein Flammschutzmittel und ist leitfähig beschichtet. Diese Folie besitzt außerdem gegebenenfalls mindestens eine zusätzliche Funktionalität gegenüber der flammhemmenden Ausrüstung. Der Ausdruck zusätzliche Funktionalität beinhaltet den Schrumpf und die Lötbarkeit. Alle derartigen Folien zeichnen sich durch ihre Schwerentflammbarkeit und durch ihre guten dielektrischen Eigenschaften aus. Insbesondere weisen sie eine hohe Durchschlagfestigkeit und einen niedrigen Verlustfaktor auf und gegebenenfalls darüber hinaus eine oder mehrere weitere Funktionalitäten. Die Erfindung betrifft ferner ein Verfahren zur Herstellung der Polyesterfolie sowie ihre Verwendung in Folienkondensatoren.

Folien aus Thermoplasten im angegebenen Dickenbereich, die sich zur Herstellung von Folienkondensatoren eignen, sind hinreichend bekannt.

Folien zur Herstellung von Kondensatoren müssen hohen Ansprüchen hinsichtlich ihrer elektrischen Durchschlagfestigkeit und ihrer dielektrischen Absorption genügen, um im Kondensator eine ausreichende Spannungsbelastbarkeit zu gewährleisten und um sich beim Lade- und Entladevorgang nur geringfügig zu erwärmen. Diese wird, wie u.a. in EP-0-791 633 beschrieben, durch eine hohe Reinheit der eingesetzten Rohstoffe gewährleistet. Daher ist es in der Regel notwendig, auf Additive zu verzichten (Ausnahmen bilden anorganisch mineralische Additive wie die in der Regel verwendeten $SiO_2$ oder $CaCO_3$-Pigmente und Polymere mit sehr geringer Dielektrizitätskonstante wie Polystyrol u.ä.), um die elektrischen Eigenschaften nicht negativ zu beeinflussen.

Folienkondensatoren aus konventionellen thermoplastischen Folien sind brennbar und müssen für Anwendungen, die besonderen Brandschutzauflagen unterliegen, mit flammhemmend ausgerüsteten Materialien ummantelt (geboxt) werden. Diese Boxen bieten zwar einen gewissen Schutz, die Kondensatorfolie im Inneren entzündet sich jedoch weiterhin ab einer gewissen Temperatur bzw. nach dem Schmelzen der Box.

Die Box erzeugt zudem weitere Kosten und beansprucht Platz. Zudem werden in vielen Anwendungen keine klassischen bedrahteten Kondensatoren mehr eingesetzt, sondern oberflächenlötbare, sogenannte SMD (Surface-Mounting-Device)-Kondensatoren verwendet.

Flammhemmend ausgerüstete Folien aus Thermoplasten sind aus der DE-A 2346787 bekannt. Die verwendeten Rohstoffe führen jedoch zu erheblichen Problemen in den für die Herstellung von Kondensatorfolien notwendigen Trocknungsprozessen (u.a. Verklebungen und Kettenabbau) und eignen sich aufgrund ihrer elektrischen Eigenschaften nicht zur Herstellung elektrisch stabiler Kondensatoren.

PET Folien, die sich zur Herstellung von SMD-Kondensatoren eignen, sind bekannt (WO 98/13415). Diese Folien sind jedoch nicht flammhemmend ausgerüstet und die daraus hergestellten Kondensatoren können daher auch nicht in Bereichen eingesetzt werden, in denen diese Eigenschaft benötigt wird.

Aufgabe der vorliegenden Erfindung ist es, die beschriebenen Nachteile des Standes der Technik zu vermeiden

Gegenstand der Erfindung ist daher eine biaxial orientierte, flammhemmend ausgerüstete Folie, die als Hauptbestandteil einen kristallisierbaren Thermoplasten enthält und eine Dicke im Bereich von 0,5 bis 12 µm, vorzugsweise 1,2 bis 6,0 µm aufweist, eine elektrische Durchschlagfestigkeit AC von ≥ 200 kV/mm und eine Rauheit $R_a$ von ≤ 150 nm besitzt und die mindestens ein Flammschutzmittel enthält sowie leitfähig beschichtet ist und gegebenenfalls mit mindestens einer weiteren Funktionalität versehen ist, zur Verfügung zu stellen. Die Erfindung betrifft ferner ein Verfahren zur Herstellung dieser Folie und ihre Verwendung.

Die Folie gemäß der Erfindung zeichnet sich durch ihre Schwerentflammbarkeit und eine hohe Durchschlagfestigkeit aus. Ferner besitzt sie eine niedrige dielektrische Absorption, (d.h. einen niedrigen dieelektrischen Verlustfaktor), lässt sich wirtschaftlich herstellen und eignet sich infolge ihrer leitfähigen Beschichtung zur Herstellung von elektrisch stabilen Kondensatoren, welche ebenfalls schwer entflammbar und gegebenenfalls in einer besonderen Ausführungsform SMD-lötfähig sind. Ein solcher schwerentflammbarer (SMD)-Kondensator benötigt keine Box und bietet somit den Vorteil eines besonders geringen Platzbedarfes.

Des weiteren kann die Folie gemäß der Erfindung auch ohne Verlust ihrer Eigenschaften vor ihrer Beschichtung rezykliert werden, d.h. dass das Regenerat wieder eingesetzt werden kann.

Eine flammhemmende Wirkung bedeutet, dass die Folien beziehungsweise daraus hergestellten Kondensatoren in einer so genannten Brandschutzprüfung die Bedingungen nach DIN 4102 Teil 2 und insbesondere nach DIN 4102 Teil 1 erfüllen und in die Baustoffklassen B2 und insbesondere B1 der schwer entflammbaren Stoffe eingeordnet werden können. Des weiteren sollen die Folie und ein daraus hergestellte Kondensator die Brandklasse V0 nach UL-94 beziehungsweise UL94 V (vertical burning test) beziehungsweise VTM erreichen.

Eine hohe Durchschlagfestigkeit bedeutet, dass die Durchschlagsfestigkeit der Folie gemessen nach DIN 53481 nach der Kugel/Platte-Methode bei Wechselspannung (AC) ≥ 200 kV/mm, bevorzugt ≥ 240 kV/mm und insbesondere ≥ 280 kV/mm ist.

Ein niedriger dielektrischer Verlustfaktor (tan delta) bedeutet, dass er bei 30 °C und 1 kHz Werte von ≤ 0,0065, bevorzugt ≤ 0,0055 und insbesondere ≤ 0,0050 und bei 120 °C und 1 kHz Werte von ≤ 0,027, bevorzugt ≤ 0,025 und insbesondere ≤ 0,021 aufweist.

Der Ausdruck "elektrisch stabile Kondensatoren" bedeutet, dass die flammhemmend ausgerüsteten Kondensatoren eine deutlich verlängerte Lebensdauer besitzen und keine hohen Ausfallraten in der Praxis aufweisen, verglichen mit nicht flammhemmend ausgerüsteten Kondensatoren.

SMD-lötfähig bedeutet, dass sich die Kondensatoren bei den für Reflow-Löten üblichen Temperaturen oberhalb von 220°C nicht mechanisch verformen und elektrisch stabil bleiben.

Die Folie enthält als Hauptbestandteil einen kristallisierbaren Thermoplasten. Geeignete kristallisierbare bzw. teilkristalline Thermoplaste sind beispielsweise Polyethylenterephthalat (PET), Polyethylennaphthalat (PEN), Polybutylenterephthalat (PBT), bibenzolmodifiziertes Polyethylenterephthalat (PETBB), bibenzolmodifiziertes Polybutylenterephthalat (PBTBB), bibenzolmodifiziertes Polyethylennaphthalat (PENBB) oder Mischungen daraus, wobei PET, PEN und PETBB bevorzugt sind.

Zur Herstellung der Thermoplaste können neben den Hauptmonomeren wie Dimethylterephthalat (DMT), Ethylenglycol (EG), Propylenglycol (PG), 1,4-Butandiol, Terephthalsäure (TA), Benzoldicarbonsäure und/oder 2,6-Naphthalindicarbonsäure (NDA), auch Isophthalsäure (IPA), *trans-* und/oder *cis*-1,4-Cyclohexandimethanol (*c*-CHDM, *t*-CHDM oder c/t-CHDM) und andere geeignete Dicarbonsäurekomponenten (oder Dicarbonsäureester) und Diolkomponenten verwendet werden.

Gemäß der Erfindung versteht man unter kristallisierbaren Thermoplasten

- kristallisierbare Homopolymere,
- kristallisierbare Copolymere,
- kristallisierbare Compounds,
- kristallisierbares Recyklat und
- andere Variationen von kristallisierbaren Thermoplasten.

Bevorzugt sind hierbei Polymere, bei denen die Dicarbonsäurekomponente zu 95 % und mehr, insbesondere zu 98 % und mehr aus TA oder NDA besteht. Bevorzugt sind weiterhin Thermoplaste, bei denen die Diolkomponente zu 90 % und mehr, insbesondere zu 93 % und mehr aus EG besteht. Bevorzugt sind auch Polymere bei denen der Diethylenglykolanteil am Gesamtpolymer im Bereich von 1 bis 2 % liegt. Bei allen vorgenannten Mengenangaben bleibt das Flammschutzmittel unberücksichtigt.

Die Folie gemäß der Erfindung enthält weiterhin anorganische oder organische Verbindungen, die zur Einstellung der Oberflächentopographie benötigt werden. Eine zu hohe Rauheit ($R_a$-Wert) beeinträchtigt jedoch die elektrische Ausbeute in der Kondensatorfertigung. Daher hat es sich als zweckmäßig erwiesen, wenn die im folgenden beschriebenen Werte für die Rauheit eingestellt werden, die je nach Stärke der Folie unterschiedliche Werte haben können. Die Menge der eingesetzten Verbindungen ist abhängig von den verwendeten Substanzen und ihrer Partikelgröße. Letztere liegt im Bereich von 0,01 bis 10,0, vorzugsweise 0,1 bis 5,0 und insbesondere 0,3 bis 3,0 µm. Bei einer 3,6 - 12,0 µm dicken Folie wird ein $R_a$-Wert von ≤ 150 nm und vorzugsweise von ≤ 100 nm angestrebt. Bei einer 2,4 - 3,5 µm dicken Folie liegt der $R_a$-Wert bei ≤ 100 nm und vorzugsweise bei ≤ 70 nm, während er bei Foliendicken unterhalb von 2,4 µm Werte von ≤ 70 nm und vorzugsweise von ≤ 50 nm aufweist.

Geeignete Verbindungen zur Erzielung der Rauheit sind z.B. Kalziumcarbonat, Apatit, Siliziumdioxid, Titandioxyd, Aluminiumoxyd, vernetztes Polystyrol, Zeolithe und andere Silikate und Aluminiumsilikate. Diese Verbindungen werden im allgemeinen in Mengen von 0,05 bis 1,5 %, vorzugsweise 0,1 bis 0,6 % eingesetzt. Durch einfache Mischversuche und anschließendem Messen der $R_a$-Werte lässt sich die Rauheit je nach eingesetzter Verbindung leicht bestimmen. Beispielsweise führt eine Kombination aus den Siliziumdioxidpigmenten 0,11 % ®Sylysia 320 (Fuji, Japan) und 0,3 % ®Aerosil TT600 (Degussa, Deutschland) bei einer 5 µm Folie zu einem $R_a$-Wert von 70 nm. Ebenso ergibt eine Folie mit der Dicke von 5 µm, die 0,6 % ®Omyalite (Kalziumkarbonat der Firma Omya, Schweiz) mit einer mittleren Partikelgröße von 1,4 µm enthält, einen $R_a$-Wert von 60 nm. Verwendet man dieselben Rezepturen zur Herstellung einer 1,4 µm dicken Folie so erhält man einen $R_a$-Wert von 35 nm ± 5 nm.

Zum Erreichen des elektrischen Verlustfaktors tan delta und der Durchschlagfestigkeit AC hat es sich als zweckmäßig erwiesen, wenn der Schmelzewiderstand des verwendeten Thermoplasts im Mittel einen Wert von ≥ 1 · $10^7$ Ω cm, vorzugsweise ≥ 10 · $10^7$ Ω cm und insbesondere ≥ 25 • $10^7$ Ω cm besitzt. Der Mittelwert wird berechnet nach der Formel

$$1 /(x_1 \cdot 1 / W_1 + X_2 \bullet 1 /W_2 + ..... + X_n \bullet 1 /W_n)$$

wobei

$X_1$ ($X_n$) = der Anteil der Thermoplastchips der Komponente 1 (n) und

$W_1$ ($W_n$) = der Widerstand der Thermoplastchips der Komponente 1 (n) ist

Die Standardviskosität SV (DCE) der Folie, gemessen in Dichloressigsäure nach DIN 53728, liegt im allgemeinen im Bereich von 600 bis 1000, vorzugsweise von 700 bis 900. Je nach prozessbedingtem SV-Verlust in der Extrusion (abhängig vom gewählten Trocknertyp und Bedingungen) liegt der SV der Eingangsrohstoffe im Mittel um 5 bis 70 Einheiten über den genannten Bereichen für die Folie.

Die Folie enthält weiterhin ein Flammschutzmittel, das bevorzugt über die sogenannte Masterbatch-Technologie direkt bei der Folienherstellung zudosiert wird, wobei der Anteil des Flammschutzmittels im Bereich von 0,5 bis 30,0 Gew.-%, vorzugsweise von 1,0 bis 20,0 Gew.-%, bezogen auf das Gewicht des kristallisierbaren Thermoplasten, liegt. Im Masterbatch beträgt der Anteil des Flammschutzmittels allgemein 5,0 bis 60,0 Gew.-%, bevorzugt 10,0 bis 50,0 Gew.-%, jeweils bezogen auf das Gesamtgewicht des Masterbatches.

Geeignete Flammschutzmittel sind beispielsweise Brom- und Chlorverbindungen (eventuell in Verbindung mit Antimontrioxid) und Metallhydroxyde sowie stickstoffhaltige Verbindungen (z.B. Melaminverbindungen) und Borverbindungen. Die Halogenverbindungen haben jedoch im allgemeinen den Nachteil, dass im Brandfall und bei der Verarbeitung halogenhaltige Nebenprodukte entstehen können. Im Brandfall entstehen insbesondere Halogenwasserstoffe.

Bevorzugte Flammschutzmittel, die gemäß der Erfindung eingesetzt werden, sind beispielsweise organische Phosphorverbindungen wie Carboxyphosphinsäuren, deren Anhydride und die Phosphorverbindung ®Amgard P 1045 der Fa. Albright & Wilson. Günstig ist es, wenn die organische Phosphorverbindungen im Thermoplast löslich sind, da andernfalls die geforderten Eigenschaften nicht immer erfüllt werden. Bevorzugt sind außerdem organische Phosphorverbindungen, die in die Kette des Thermoplasts eingebaut werden, z.B. phosphorhaltige Esterwie (6-Oxo-dibenzo[c, e] 1,2]oxaphosphorin-6-ylmethyl)-bernsteinsäure-bis(2-hydroxyethyl)ester (CAS-Nr. 63562-34-5).

Da die Flammschutzmittel im allgemeinen eine gewisse Hydrolyseempfindlichkeit aufweisen, kann der zusätzliche Einsatz eines Hydrolysestabilisators sinnvoll sein. Neben den erwähnten Additiven kann die Folie zusätzlich weitere Komponenten wie Radikalfänger und/oder andere Polymere wie Polyetherimide enthalten.

Das Flammschutzmittel wird vorzugsweise über die Masterbatch-Technologie zugegeben. Das Flammschutzmittel wird zunächst in einem Trägermaterial voll dispergiert. Als Trägermaterial kommen der Thermoplast selbst, z.B. das Polyethylenterephthalat oder auch andere Polymere, die mit dem Thermoplasten verträglich sind, in Frage. Nach der Zudosierung zu dem Thermoplasten für die Folienherstellung schmelzen die Bestandteile des Masterbatches während der Extrusion und werden so in dem Thermoplasten gelöst.

Die Herstellung des Masterbatch kann auch in-situ erfolgen, d.h. die Monomeren zur Herstellung des Thermoplastwerden gemeinsam mit den weiteren Komponenten, z.B. den Flammschutzmitteln und/oder den Verbindungen zur Erzielung der Rauheit vermischt und die erhaltenen Mischungen polykondensiert.

Zur wirtschaftlichen Herstellung zählt, dass die Rohstoffe beziehungsweise. Rohstoffkomponenten, die zur Herstellung der Folie benötigt werden, mit handelsüblichen Industrietrocknern, wie Vakuumtrockner (d.h. unter vermindertem Druck), Wirbelschichttrockner, Fließbetttrockner oder Festbetttrockner (Schachttrockner), getrocknet werden können. Wesentlich ist, dass die erfindungsgemäß eingesetzten Rohstoffe nicht verkleben und nicht thermisch abgebaut werden. Die genannten Trockner arbeiten im allgemeinen bei normalen Druck mit Temperaturen zwischen 100 und 170 °C, wo nach dem Stand der Technik flammhemmend ausgerüstete Rohstoffe verkleben können und die Trockner und/oder Extruder zusetzen. Bei einem Vakuumtrockner, der die schonendsten Trockenbedingungen erlaubt, durchläuft der Rohstoff einen Temperaturbereich von ca. 30 °C bis 130 °C bei einem vermindertem Druck von 50 mbar. Auch bei diesen Trocknern mit Trocknungstemperaturen unter 130 °C werden in der Kondensatorfolienproduktion Nachtrockner (Hopper) mit Temperaturen oberhalb von 100 °C benötigt, bei denen flammhemmend ausgerüstete Rohstoffe nach dem Stand der Technik dann verkleben können. Im allgemeinen ist ein Nachtrocknen in einem Hopper bei Temperaturen von 100 bis 130 °C und einer Verweilzeit von 3 bis 6 Stunden erforderlich.

Die Folie gemäß der Erfindung wird im allgemeinen nach an sich bekannten Extrusionsverfahren hergestellt.

Im Rahmen eines dieser Verfahren wird so vorgegangen, dass die entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert wird.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längs- und auch die Querstreckung bei $T_g$ +10 °C bis $T_g$ +60 °C ($T_g$ = Glastemperatur der Folie) durchgeführt. Das Längsstreckverhältnis liegt allgemein im Bereich von 2,5:1 bis 6,0:1, vorzugsweise von 3,0:1 bis 5,5:1. Das Querstreckverhältnis liegt allgemein im Bereich von 3,0:1 bis 5,0:1, vorzugsweise von 3,5:1 bis 4,5:1 und das der gegebenenfalls durchgeführten zweiten Längs- und Querstreckung liegt bei 1,1:1 bis 5:1. Die Längsstreckung kann gegebenenfalls gleichzeitig mit der Querstreckung (Simultanstreckung) durchgeführt werden. Als besonders günstig hat es sich erwiesen, wenn das Streckverhältnis in Längs- und Querrichtung jeweils größer als 3,5 ist.

Bei der nachfolgenden Thermofixierung wird die Folie etwa 0,1 bis 10 s lang bei einer Temperatur von 180 bis 260 °C, vorzugsweise 220 bis 245 °C, gehalten. Anschließend an bzw. beginnend in der Thermofixierung wird die Folie um 0 bis 15 %, vorzugsweise um 1,5 bis 8 %, in Quer- und gegebenenfalls auch in Längsrichtung relaxiert und die Folie in üblicher Weise abgekühlt und aufgewickelt.

In einer bevorzugten Ausführungsform für SMD-Kondensatoren wird die Folie bei der nachfolgenden Thermofixierung etwa 0,1 bis 10 s lang bei einer Temperatur von 180 bis 260 °C, vorzugsweise 220 bis 245 °C, gehalten. Anschließend an bzw. während der Thermofixierung wird die Folie, vorzugsweise in mindestens zwei Stufen, um insgesamt 4 bis 15 %, vorzugsweise um 5 bis 8 %, in Querrichtung relaxiert, wobei mindestens die letzten 2 % der Gesamtrelaxation bei Temperaturen unterhalb von 180 °C, vorzugsweise bei 180 bis 130 °C, stattfinden. Die Folie wird anschließend in üblicher Weise abgekühlt und aufgewickelt. Eine Relaxation kann auch in Längsrichtung erfolgen.

Zum Erreichen der genannten Durchschlagfestigkeiten und der gewünschten elektrischen Stabilität der Kondensatoren hat es sich als zweckmäßig erwiesen, wenn die Längsdickenschwankung der Folie im allgemeinen nicht mehr als 20 %, vorzugsweise weniger als 15 % und insbesondere weniger als 10 % der Foliendicke ausmacht, bezogen auf die mittlere Dicke der Folie. Hierbei ist es günstig, wenn die Temperaturen im Extrusionsbereich (Düse + Schmelzeleitung + Extruder) in der Größenordnung von $T_s$ ($T_s$ = Schmelzpunkt der Folie) +20 bis + 50 °C liegen. Besonders geeignet sind Temperaturen von $T_s$ + 30 bis $T_s$ +45 °C.

Die aufgewickelte Folie wird anschließend in konventionellen Metallisierungsmaschinen (z.B. von Fa. Applied Films vorm. Leybold) nach den bekannten Verfahren metallisiert (eine Beschichtung mit einem anderen leitfähigen Material wie leitfähigen Polymeren ist ebenfalls möglich) und in die gewünschte Breite zur Kondensatorherstellung konfektioniert. Aus diesen metallisierten Schmalschnitten werden Kondensatorwickel gefertigt, anschließend flachgepresst (Temperaturen zwischen 0 und 280 °C), schoopiert und kontaktiert.

Die Folie weist nach der Metallisierung in einer besonderen Ausführungsform für SMD-Kondensatoren (bzw. sonstigen leitfähigen Beschichtung) einen Längsschrumpf bei 200 °C (15 min) von ≤ 5 %, vorzugsweise von ≤ 4 % und insbesondere von ≤ 3,5 % auf. Dieser Längsschrumpf ist jedoch nicht kleiner als 1 %. Der Querschrumpf bei 200 °C (15 min) besitzt Werte von ≤ 2 % vorzugsweise von ≤1 % und insbesondere von ≤ 0,5 % auf. Der Wert des Schrumpfens ist in TD jedoch stets ≥ -0,5 %.

Eine bevorzugte Möglichkeit ist das Wickeln der Schmalschnitte auf Räder oder Stäbe, die schoopiert, im Ofen thermostabilisiert (Temperaturen zwischen 100 und 280 °C) und in die entsprechenden Kondensatorbreiten geschnitten werden (Schichtkondensatoren), welche dann abschließend kontaktiert werden. Das Tempern kann dabei gegebenenfalls auch vor dem Schoopen erfolgen.

Überraschend ist, dass die Folie trotz der Ausrüstung mit dem Flammschutzmittel keinen untolerierbar höheren dielektrischen Verlustfaktor (Tangens) aufweist als vergleichbar hergestellte Folien ohne Flammschutzmittel. Dennoch reicht die Ausrüstung mit dem Flammschutzmittel auch bei den dünnen Folien gemäß der Erfindung aus, um sowohl mit der Folie als auch mit den daraus hergestellten Kondensatoren die Anforderungen der oben genannten Flammtests zu erfüllen.

Besonders überraschend war auch die hohe Durchschlagfestigkeit der Folien gemäß der Erfindung und die sehr guten elektrischen Eigenschaften. Die Folien eignen sich daher besonders gut zur Herstellung von Kondensatoren, vorzugsweise Entstörkondensatoren. So zeigen diese Kondensatoren keine höheren Ausfallraten in der Spannungsprüfung und in ihrer Lebensdauer. Aufgrund der guten Eigenschaften der Folie, insbesondere der Erfüllung der Anforderungen an die Brandschutzprüfung benötigen die daraus hergestellten Kondensatoren keine schützende Ummantelung (Box).

In den nachfolgenden Ausführungsbeispielen erfolgt die Messung der einzelnen Eigenschaften gemäß den angeführten Normen bzw. Verfahren.

*Standardviskosität (SV) und intrinsische Viskosität (IV)*

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität:

$$IV = [\eta] = 6,907 \cdot 10^{-4} \ SV \ (DCE) + 0,063096 \ [dl/g]$$

*Brandverhalten*

1. Kondensatoren

Je 100 der wie unten beschrieben hergestellten Kondensatoren werden einem Brandtest gemäß dem UL-94V (vertical burning test) unterworfen. Der Test gilt als bestanden, wenn mindestens 99 Kondensatoren mindestens die Brandklasse V0 erfüllen. Werden diese Kriterien nicht erreicht, gilt der Test als nicht bestanden.

2. Folie

51 mm breite und 203 mm lange Streifen der Folie werden derart übereinander angeordnet, bis sich aus der bekannten Dicke der Folie rechnerisch ein Stapel von 140 μm Höhe ergibt. Dieser Stapel wird zwischen zwei Platten gelegt und bei 200 °C mit einem Druck von 0,1 kg pro cm$^2$ für 5 Minuten gepresst. Das Brandverhalten dieses Streifens wird nach UL-94-VTM ermittelt.

*Rauheit*

Die Rauheit $R_a$ der Folie wird nach DIN 4768 bei einem Cut-off von 0,25 mm bestimmt.

*Elektrische Durchschlagfestigkeit*

Die elektrische Durchschlagfestigkeit wird nach DIN53481 bei Wechselspannung (50 Hz) als Mittelwert von 10 Messstellen angegeben.

*Verlustfaktor (tangens delta)*

Der Verlustfaktor wird in Anlehnung an DIN53483 bestimmt.

*Spannungsprüfung*

An 100 Exemplaren der gefertigten Kondensatoren wird eine Spannung für jeweils 2 Sekunden angelegt. Die Spannung richtet sich nach der Dicke der Einsatzfolie und berechnet sich nach Spannung in Volt = 69•(Dicke in μm)$^{1,3629}$.

Der Spannungstest gilt bei jedem Kondensator als bestanden, wenn die Spannung während der zwei Sekunden um nicht mehr als 10 % abnimmt. Der Gesamttest gilt als bestanden, wenn von den eingesetzten Kondensatoren höchstens 2 ausfallen.

*Lebensdauer*

100 Kondensatoren werden bei 50 °C für 500 Stunden in einem Autoklaven bei 50 % rel. Luftfeuchte gelagert und vor und nach dieser Zeit der Spannungsprüfung unterzogen. Der Test gilt als bestanden, wenn von den eingesetzten Kondensatoren, die eingangs den Spannungstest bestanden haben, nach der Temperung höchstens 2 ausfallen.

*Längsdickenschwankung*

Die Dicke wird auf einem 10 Meter langen Folienstreifen entweder kontinuierlich mittels kapazitiver Dickenmessung oder per Taster alle 2 cm bestimmt. Die minimale gemessene Dicke wird von der maximalen abgezogen und das Resultat in Prozent der mittleren Dicke angegeben.

*Schmelzeleitfähigkeit / Schmelzewiderstand*

15 g Rohstoff werden in ein Glasrohr verbracht und 2 Stunden bei 180 °C getrocknet. Das Rohr wird in ein 285 °C heißes Ölbad getaucht und evakuiert. Durch schrittweises Absenken des Drucks auf 0,1 • 10$^{-2}$ bar wird die Schmelze blasenfrei gemacht (entschäumt). Das Rohr wird anschließend mit Stickstoff geflutet und zwei auf 200 °C vorgeheizten Elektroden (zwei Platinbleche (A = 1 cm$^2$) im Abstand von 0,5 cm voneinander) langsam in die Schmelze eingetaucht. Nach 7 Minuten erfolgt bei 100 V Messspannung (High Resistance Meter 4329 A von Hewlett Packard) die Messung, wobei der Messwert zwei Sekunden nach dem Anlegen der Spannung genommen wird.

*Schrumpf*

Der thermische Schrumpf wird an 10 cm großen Quadraten, ausgeschnitten aus der Folie, bestimmt. Die Kantenlänge der nicht aufgeheizten Proben ($L_0$) werden genau ausgemessen und die Proben 15 Minuten in einem Umlufttrockenschrank bei der jeweils angegebenen Temperatur getempert. Die getemperten Proben (L) werden dem Trockenschrank entnommen und eine entsprechende Längskante bei Raumtemperatur genau vergleichend gemessen.

$$\text{Schrumpf (\%)} = \frac{L_0 - L}{L_0} \times 100$$

*SMD-Lötbarkeit*

Die aus der Folie hergestellten Kondensatoren werden für 2 Minuten einer Hitzebehandlung in einem Ofen bei 235 °C unterworfen. Anschließend werden sie der Spannungsprüfung wie oben angegeben unterzogen. Der Test gilt jedoch nur dann als bestanden, wenn optisch keine Deformationen der Kondensatoren zu erkennen sind. Deformierte Kondensatoren können in der Praxis nicht gelötet werden.

Beispiele 1 bis 5 und Vergleichsbeispiele V1 und V2

Es wurden Folien unterschiedlicher Dicke (siehe Tabelle 1) wie nachstehend beschrieben hergestellt. Daraus wurden Kondensatoren wie im Folgenden beschrieben gefertigt.

*Folienherstellung*

Thermoplast-Chips und die weiteren Bestandteile wurden gemäß den in den Beispielen angegebenen Verhältnissen gemischt und in einem Wirbelschichttrockner bei 155 °C für 1 Minute vorkristallisiert, anschließend für 3 Stunden in einem Schachttrockner bei 150 °C getrocknet und bei 290 °C extrudiert. Das geschmolzene Polymer wurde aus einer Düse über eine Abzugswalze abgezogen. Der Film wurde um den Faktor 3,8 in Maschinenrichtung bei 116 °C gestreckt und in einem Rahmen bei 110 °C eine Querstreckung um den Faktor 3,7 durchgeführt. Anschließend wurde die Folie bei 230 °C thermofixiert und in Querrichtung um 4 % bei Temperaturen von 200 - 180 °C relaxiert.

*Kondensatorherstellung*

Die Folie wurde jeweils mit einer ca. 500 Angstrøm dicken Aluminiumschicht bedampft, wobei mittels Abdeckbändern ein unmetallisierter Streifen von 2 mm Breite zwischen je 18 mm breiten, metallisierten Streifen erzeugt und die Folie anschließend in 10 mm breite Streifen geschnitten wird, so dass am Rand der 1 mm breite, unmetallisierte Streifen (Freirand) verbleibt. Zwei je drei Meter lange Streifen, einer mit dem Freirand auf der linken Seite und einer mit dem Freirand auf der rechten Seite, werden gemeinsam auf einen Metallstift mit drei mm Durchmesser aufgewickelt. Dabei haben die beiden Streifen einen Versatz von 0,5 mm in der Breitenrichtung. Die Wickel werden anschließend bei 140 °C für 5 Minuten mit einem Druck von 50 kg/cm$^2$ flachgepresst. Die so entstandenen Wickel werden auf beiden Seiten schoopiert und mit Kontaktdrähten versehen.

*Verwendete Rohstoffe*

| | |
|---|---|
| Rohstoff R1: | PET (Typ M 03, KoSa), SV-Wert 820 |
| Rohstoff R2: | PEN, SV-Wert 900 |
| Masterbatch MB1: | 15,0 Gew.-% (6-Oxo-dibenzo[c,e$^I$ 1,2]oxaphosphorin-6-ylmethyl)-bernsteinsäure-bis(2-hydroxyethyl)ester (CAS-Nr. 63562-34-5) (M-Ester der Firma Sanko Co. Ltd.,Japan) und 85,0 Gew.% PET, SV-Wert 840 |
| Masterbatch MB2: | 1,0 Gew.-% Sylysia 320,3,0 Gew.-% Aerosil TT600 und 96,0 Gew.-% PET, SV-Wert 800 |
| Masterbatch MB3: | 10,0 Gew.-% Decabromdiphenylethan und 90,0 Gew.-% PET, SV-Wert 810 |
| Masterbatch MB4: | 1,0 Gew.-% Sylysia 320,3,0 Gew.-% Aerosil TT600 und 96,0 Gew.-% PEN, SV-Wert 900 |
| Masterbatch MB5: | 15,0 Gew.-% M-Ester der Firma Sanko Co. Ltd.,Japan (Cas Nr. 63562-34-5) und 85,0 Gew.% PEN, SV-Wert 900 |

Der Schmelzewiderstand der eingesetzten Rohstoffe lag im Bereich von 25 • 10$^7$ bis 30 • 10$^7$ Ω • cm, nur MB3 wies einen Wert von 0,4 • 10$^7$ Ω • cm auf.

Es wurden Folien mit den Zusammensetzungen gemäß Tabelle 1 hergestellt.

Tabelle 1

| Beispiel | Foliend icke (µm) | Zusammensetzung |
|---|---|---|
| 1 | 2 | 11,0 Gew.-% MB2, 20,0 Gew.-% MB1 und 69,0 Gew.-% R1 |
| 2 | 6 | 8,0 Gew.-% MB2, 20,0 Gew.-% MB1 und 72,0 Gew.-% R1 |
| 3 | 6 | wie Beispiel 2, jedoch Extrusionstemperatur 270 °C |
| 4 | 6 | 8,0 Gew.-% MB2, 50,0 Gew.-% MB3 und 42,0 Gew.-% R1 |
| 5 5 | 6 6 | 8,0 Gew.-% MB4, 20,0 Gew.-% MB5 und 72,0 Gew.-% R2, Extrusionstemperatur 305 °C, Streckungen bei 141 °C |
| V1 | 2 | 11,0 Gew.-% MB2 und 89,0 Gew.-% R1 |
| V2 | 6 | 8,0 Gew.-% MB2 und 92,0 Gew.-% R1 |

Die Eigenschaften der Folien und der daraus hergestellten Kondensatoren sind aus der Tabelle 2 zu entnehmen.

## Tabelle 2

| Eigenschaften | | Beispiele | | | | | | | |
|---|---|---|---|---|---|---|---|---|---|
| | | 1 | 2 | 3 | 4 | 5 | V1 | V2 |
| Dicke | µm | 1,97 | 5,98 | 5,97 | 5,99 | 5,95 | 1,96 | 6,03 |
| Brandverhalten Kondensator | +/- | + | + | + | + | + | - | - |
| Brandverhalten Folie | +/- | + | + | + | (+) | + | - | - |
| Rauheit $R_a$ | nm | 40 | 52 | 53 | 56 | 60 | 38 | 55 |
| Durchschlagfestigkeit | V/µm | 298 | 302 | 290 | 195 | 305 | 312 | 320 |
| Tangens bei 120 °C 1kHz | | 0,021 | 0,0205 | 0,0205 | 0,028 | 0,013 | 0,014 | 0,013 |
| Tangens bei 30 °C 1kHz | | 0,0045 | 0,0048 | 0,0049 | 0,0065 | 0,0046 | 0,0045 | 0,0044 |
| Spannungsprüfung | +/- | + | + | (+) | - | + | + | + |
| Lebensdauer | +/- | + | + | + | - | + | + | + |
| Längsdickenschwankung | % | 9 | 4 | 25 | 4 | 6 | 9 | 3 |
| SV der Folie | | 760 | 769 | 770 | 765 | 820 | 783 | 775 |

+ = gut          (+) = mäßig          - = schlecht

EP 1 347 477 A2

Beispiele 6 und 7 und Vergleichsbeispiel V3

Es wurden Folien unterschiedlicher Dicke (siehe Tabelle 3) wie nachstehend beschrieben hergestellt. Daraus wurden Kondensatoren wie im Folgenden beschrieben gefertigt.

*Folienherstellung*

Thermoplast-Chips und die weiteren Bestandteile wurden gemäß den in den Beispielen angegebenen Verhältnissen gemischt und in einem Wirbelschichttrockner bei 155 °C für 1 Minute vorkristallisiert, anschließend für 3 Stunden in einem Schachttrockner bei 150 °C getrocknet und bei 290 °C extrudiert. Das geschmolzene Polymer wurde aus einer Düse über eine Abzugswalze abgezogen. Der Film wurde um den Faktor 3,8 in Maschinenrichtung bei 116 °C gestreckt und in einem Rahmen bei 110 °C eine Querstreckung um den Faktor 3,7 durchgeführt. Anschließend wurde die Folie bei 239 °C thermofixiert und in Querrichtung um 4 % bei Temperaturen von 230 - 190 °C und anschließend nochmals um 3 % bei Temperaturen von 180 - 130 °C relaxiert.

*Kondensatorherstellung*

Die Folie wurde jeweils mit einer ca. 500 Ångstrøm dicken Aluminiumschicht bedampft, wobei mittels Abdeckbändern ein unmetallisierter Streifen von 2 mm Breite zwischen je 18 mm breiten, metallisierten Streifen erzeugt und die Folie anschließend in 10 mm breite Streifen geschnitten wurde, so dass am Rand der 1 mm breite, unmetallisierte Streifen (Freirand) verblieb. Zwei je 600 Meter lange Streifen, einer mit dem Freirand auf der linken Seite und einer mit dem Freirand auf der rechten Seite, wurden gemeinsam auf ein Metallrad mit 20 cm Durchmesser aufgewickelt. Dabei hatten die beiden Streifen einen Versatz von 0,5 mm in der Breitenrichtung. Oberhalb und unterhalb der metallisierten Streifen wurden je 10 Lagen unmetallisierte Folie aufgewickelt. Über der obersten Lage wurde ein Metallband mit einem Druck von 0,1 kg/cm$^2$ festgezogen. Der Wickel auf dem Rad wurde anschließend auf beiden Seiten schoopiert, mit einer 0,2 mm dicken Silberschicht bedampft und bei 195 °C für 60 Minuten im Ofen (geflutet mit trockenem Stickstoff) getempert. Von dem Wickelrad wurde anschließend das Metallband entfernt und dann im Abstand von 0,7 cm in einzelne Kondensatoren geschnitten.
Es wurden Folien mit den Zusammensetzungen gemäß Tabelle 3 hergestellt.

Tabelle 3

| Beispiel | Folien dicke (µm) | Zusammensetzung |
|---|---|---|
| 6 | 2 | 11,0 Gew.-% MB2, 20,0 Gew.-% MB1 und 69,0 Gew.-% R1 |
| 7 | 6 | 8,0 Gew.-% MB4, 20,0 Gew.-% MB5 und 72,0 Gew.-% R2, Extrusionstemperatur 305 °C, Streckungen bei 141 °C. Anschließend wurde die Folie bei 247 °C thermofixiert und in Querrichtung um 4 % bei Temperaturen von 247 - 190 °C und dann nochmals um 3 % bei Temperaturen von 180 - 150 °C relaxiert. |
| V3 | 2 | 11,0 Gew.-% MB2 und 89,0 Gew.-% R1 |

Die Eigenschaften der Folien und der daraus hergestellten Kondensatoren sind der Tabelle 4 zu entnehmen.

Tabelle 4

| Eigenschaften | | | Beispiele | | |
|---|---|---|---|---|---|
| | | | **6** | **7** | **V3** |
| Dicke | | µm | 1,97 | 5,95 | 1,96 |
| Brand-verhalten | Kondensator | +/- | + | + | - |
| | Folie | +/- | + | + | - |
| Rauheit $R_a$ | | nm | 39 | 62 | 37 |
| Durchschlagfestigkeit | | V/µm | 298 | 305 | 319 |
| Tangens bei 120 °C 1kHz | | | 0,018 | 0,014 | 0,015 |
| Tangens bei 30 °C 1kHz | | | 0 | 0,005 | 0,005 |

Tabelle 4 (fortgesetzt)

| Eigenschaften | | Beispiele | | |
|---|---|---|---|---|
| | | 6 | 7 | V3 |
| Spannungsprüfung | +/- | + | + | + |
| Lebensdauer | +/- | + | + | + |
| SMD-Lötbarkeit | +/- | + | + | + |
| Längsdickenschwankung | % | 7 | 5 | 8 |
| SV | | 762 | 824 | 780 |
| Schrumpf MD 15 | % | 3,2 | 3,2 | 3,2 |
| Schrumpf TD 15 | % | 0,1 | 0,1 | 0,2 |
| + = gut (+) = mäßig (d.h. schwankende Ergebnisse) - = schlecht | | | | |

In den Beispielen 1 bis 7 ist das Brandverhalten der Kondensatoren einwandfrei. Die Folien der Beispiele 6 und 7 sind zusätzlich SMD-lötfähig. V1, V2 und V3 zeigen ein ungenügendes Brandverhalten.

**Patentansprüche**

1. Biaxial orientierte, flammhemmend ausgerüstete Folie, die als Hauptbestandteil einen kristallisierbaren Thermoplasten enthält und eine Dicke im Bereich von 0,5 bis 12 µm aufweist, eine elektrische Durchschlagfestigkeit AC von ≥ 200 kV/mm und eine Rauheit $R_a$ von ≤ 150 nm besitzt und die mindestens ein Flammschutzmittel enthält sowie leitfähig beschichtet ist.

2. Folie nach Anspruch 1, **dadurch gekennzeichnet, dass** sie mit mindestens einer weiteren Funktionalität versehen ist.

3. Folie nach Anspruch 1 oder 2, **dadurch gekennzeichnet, dass** der kristallisierbare Thermoplast ein Polyethylenterephthalat, Polybutylenterephthalat, Polyethylennaphthalat, bibenzolmodifiziertes Polyethylenterephthalat oder Mischungen daraus, vorzugsweise Polyethylenterephthalat, Polyethylennaphthalat oder bibenzolmodifiziertes Polyethylenterephthalat, ist.

4. Folie nach Anspruch 1, 2 oder 3, **dadurch gekennzeichnet, dass** die Konzentration des Flammschutzmittels im Bereich von 0,5 Gew.-% bis 30,0 Gew.-%, vorzugsweise von 1,0 bis 20,0 Gew.-%, bezogen auf das Gewicht des kristallisierbaren Thermoplasten, liegt.

5. Folie nach einem oder mehreren der Ansprüche 1 bis 4, **dadurch gekennzeichnet, dass** als Flammschutzmittel organische Phosphorverbindungen, vorzugsweise phosphorhaltige Ester, enthalten sind.

6. Folie nach einem oder mehreren der Ansprüche 1 bis 5, **dadurch gekennzeichnet, dass** sie einen dielektrischen Verlustfaktor Tangens delta bei 1 kHz und 30 °C von ≤ 0,0065 und einen Tangens delta bei 1 kHz und 120 °C von ≤ 0,027 besitzt.

7. Folie nach einem oder mehreren der Ansprüche 1 bis 6, **dadurch gekennzeichnet, dass** die Folie einen Längsschrumpf bei 200 °C (15 min) von ≤5 % und einen Querschrumpf bei 200 °C (15 min) von ≤ 2 % besitzt.

8. Verfahren zur Herstellung einer Folie nach Anspruch 1, **dadurch gekennzeichnet, dass** ein kristallisierbarer Thermoplast und ein Flammschutzmittel nach einem Extrusionsverfahren zu einem flachen Schmelzefilm ausgeformt, mit Hilfe einer Kühlwalze abgeschreckt und die so erhaltene weitgehend amorphe Folie zur Verfestigung auf einer oder mehreren Walze/n abgezogen, die Folie anschließend biaxial gestreckt (orientiert), thermofixiert und die Folie in üblicher Weise abgekühlt, aufgewickelt und mit einer leitfähigen Beschichtung versehen wird.

9. Verfahren nach Anspruch 8, **dadurch gekennzeichnet, dass** die Folie nach der biaxialen Streckung um insgesamt > 0 bis 15 % in Querrichtung relaxiert wird, wobei mindestens die letzten 2 % der Gesamtrelaxation bei Temperaturen unterhalb von 180 °C stattfinden.

10. Verfahren nach Anspruch 8, **dadurch gekennzeichnet, dass** die letzten 2 % der Gesamtrelaxation der Folie bei Temperaturen von 180 bis 130 °C vorgenommen werden und die Gesamtrelaxation in Querrichtung 5 bis 8 % beträgt.

11. Verfahren nach einem der Ansprüche 8 bis 10, **dadurch gekennzeichnet, dass** das Flammschutzmittel über die Masterbatch-Technologie zugeben wird und im Masterbatch neben dem Thermoplast in Mengen von 5,0 bis 60,0 Gew.-%, bevorzugt 10,0 bis 50,0 Gew.-%, jeweils bezogen auf das Gesamtgewicht des Masterbatches, enthalten ist.

12. Verwendung der Folie nach einem oder mehreren der Ansprüche 1 bis 7 zur Herstellung von Kondensatoren.

13. Verwendung nach Anspruch 12 als SMD-Kondensator.

14. Verwendung nach Anspruch 12 als Entstörkondensator.

15. Entstörkondensator, hergestellt unter Verwendung der Folie nach einem oder mehreren der Ansprüche 1 bis 7.

16. SMD-Kondensator, hergestellt unter Verwendung der Folie nach einem oder mehreren der Ansprüche 1 bis 7.